# EUROPEAN PATENT SPECIFICATION

(11) **EP 1 576 415 B1**
(45) Date of publication and mention of the grant of the patent: **14.06.2006**
(21) Application number: 03775755.6
(22) Date of filing: 09.12.2003
(51) Int. Cl.: G02F 1/1362

(54) **LIQUID CRYSTAL DISPLAYS**
FLÜSSIGKRISTALLANZEIGE
ECRANS A CRISTAUX LIQUIDES

(30) Priority: 19.12.2002 GB 0229699
(43) Date of publication of application: 21.09.2005
(73) Proprietor: Koninklijke Philips Electronics N.V., 5621 BA Eindhoven (NL); LG. Philips LCD Co. Ltd., Youngdungpo-Ku Seoul (KR)
(72) Inventor: FRENCH, Ian, D., c/o Philips I.P. & Standards, Redhill, Surrey RH1 5HA (GB); PARK, Sung-Il,c/o Philips I.P. & Standards, Redhill, Surrey RH1 5HA (GB)
(74) Representative: Williamson, Paul Lewis
(86) International application number: PCT/IB2003/005886
(87) International publication number: WO 2004/057416

(56) References cited:
- US-A- 5 650 358
- US-A- 5 682 211
- US-A- 5 724 111
- US-A- 6 097 454
- US-B1- 6 372 534
- "PIXEL STRUCTURE FOR HIGH APRTURE RATIO ACTIVE MACTRIX LIQUID CRYSTAL DISPLAYS" IBM TECHNICAL DISCLOSURE BULLETIN, IBM CORP. NEW YORK, US, vol. 40, no. 11, 1 November 1997 (1997-11-01), pages 3-5, XP000739901 ISSN: 0018-8689

## Description

This invention relates to active matrix liquid crystal displays, and particularly to the transistor substrate, known as the active plate, used in the manufacture of such a display.

A liquid crystal display typically comprises an active plate and a passive plate between which liquid crystal material is sandwiched. The active plate comprises an array of transistor switching devices, typically with one transistor associated with each pixel of the display. Each pixel is also associated with a pixel electrode on the active plate to which a signal is applied for controlling the brightness of the individual pixel.

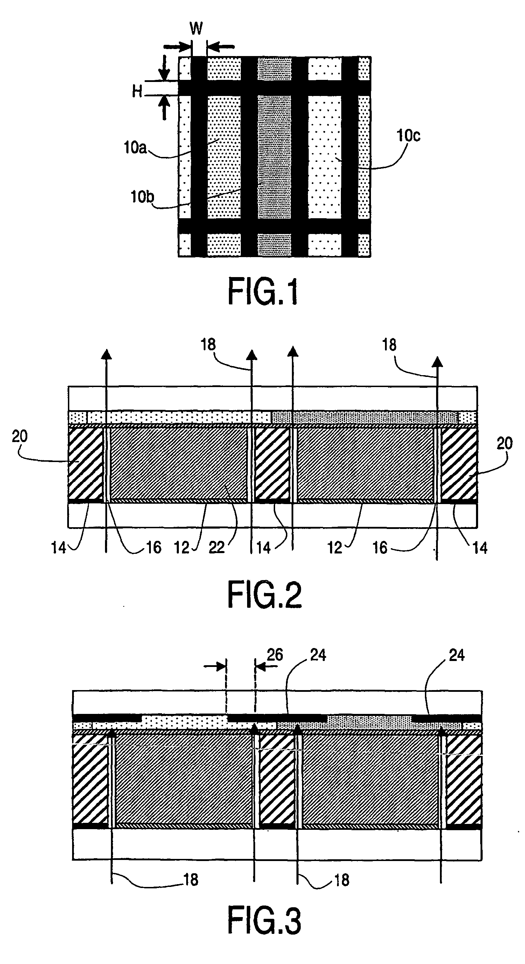

Fig. 1 shows a typical view of the transmissive areas of an AMLCD. The basic pixels are square but divided into three vertical sub-pixels 10 coloured red 10a, green 10b and blue 10c. To increase the optical aperture (i.e. increase the area over which a modulated light output is provided), it is necessary to decrease the width of the black lines, H and W. Due to the 3:1 height to width ratio of the sub-pixels, decreasing the column width W by an amount (for example one micron) will increase the optical aperture by three times as much as a corresponding decrease in the row width H.

A large area of the active plate is at least partially transparent, and this is required because the display is typically illuminated by a backlight. Mainly, the areas covered by the opaque row and column conductors are the only opaque parts of the plate. If the pixel electrode does not cover the transparent area, then there will be an area of liquid crystal material not modulated by the pixel electrode but which does receive light from the backlight. This reduces the contrast ratio and blackness of the display.

Figure 2 shows an arrangement in which the pixel electrodes 12 are provided between the column conductors 14, so that there is a gap 16 between the pixels and columns on the active plate through which unmodulated light 18 can pass. Regions 20 of the LC layer are shielded by the columns 14 whereas regions 22 are modulated by the pixel electrodes 12. This is a so-called "standard" display. In such a display, a black mask layer is typically provided for shielding these areas of the active plate, and additionally to shield the transistors as their operating characteristics are light-dependent. Conventionally, the black mask layer is located on the passive plate of the active matrix cell. Plate to plate alignment during cell manufacture is less accurate than layer to layer alignment on a substrate. This means that the black mask must be comparatively large to ensure that it blocks stray light at the edge of pixels. Figure 3 shows a cell with a black mask 24 on the passive plate and the required overlap is shown as 26. The width of the columns of black mask layer 24 define the width W in Figure 1.

This overlap reduces the aperture of the display pixels, which reduces the power efficiency of the display. This is particularly undesirable for battery-operated devices, such as portable products.

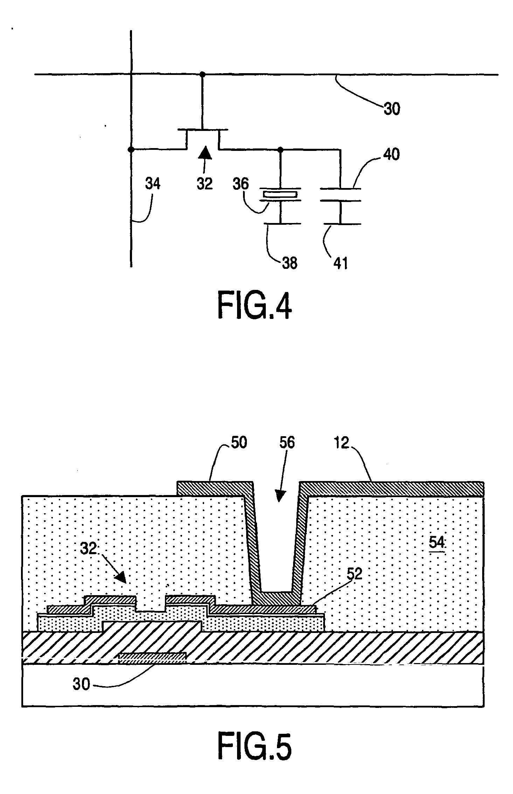

Figure 4 shows the electrical components which make up the sub pixels shown in Figure 1. A row conductor 30 is connected to the gate of a TFT 32, and a column electrode 34 is coupled to the source. The liquid crystal material provided over the pixel effectively defines a liquid crystal cell 36 which extends between the drain of the transistor 32 and a common ground plane 38. The ground plane 38 is defined by the passive plate and the other terminal of the LC cell is defined by the pixel electrodes 12. A pixel storage capacitor 40 is connected between the drain of the transistor 32 and the row conductor associated with an adjacent row of pixels or else to a separate line 41.

It has been proposed to use layers of the active plate to provide the required masking function. For example, one proposal is to define the pixel electrodes 12 to overlap the row and column conductors 30,34, so that there is no gap between the row and column conductors and the pixel electrodes, which would otherwise need to be shielded. Such an arrangement is described in US 6 372 534B1. This results in a high aperture pixel, and is called a Field Shielded Pixel (FSP) design.

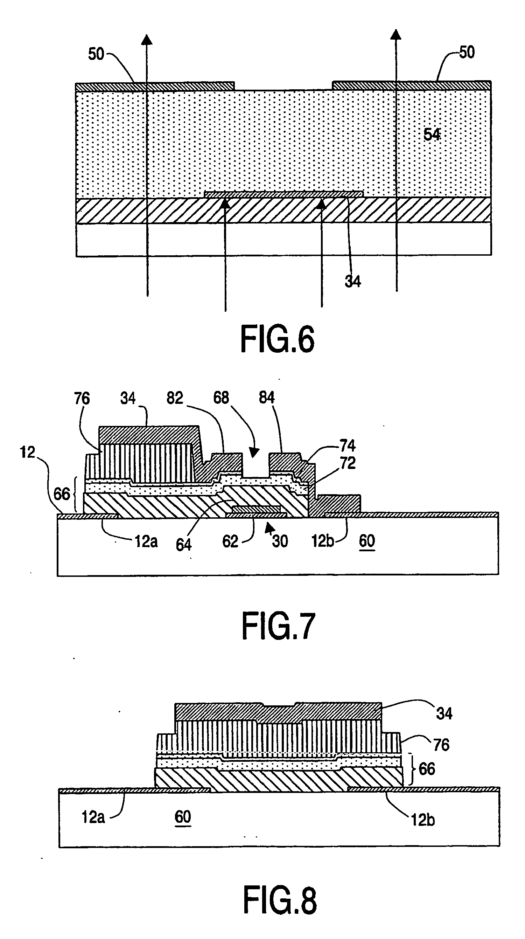

Figure 5 shows a cross-section through the TFT of a FSP panel, and Figure 6 shows the cross-section through a column.

The pixel electrode 50 overlaps the row conductor as shown in Figure 5 and overlaps the column conductor 34 as shown in Figure 6. The row and column conductors block the passage of light as shown schematically in Figure 6. The pixel electrode is provided over a polymer layer 54 and contacts the drain 52 of the TFT 32 through a via 56 in the polymer layer 54.

The main functional requirements on the polymer layer are that it should be a uniform highly transparent layer with contact holes and low capacitance. It should also have good planarisation properties to remove steps over the edges of the column that could cause disclination lines in the LC cell. Typically a layer of benzocyclobutene (BCB) more than one micron thick is used due to its high transparency, low dielectric constant (ε_{R} = 2.7) and good planarisation properties.

The BCB layer is a very expensive layer to use because of high material and processing costs. It is possible to purchase photodefinable BCB, but it cannot be used for this application because it does not have high optical transparency. This means etch masking layers must be used during fabrication. It is difficult to use a photoresist etch layer because anything that etches BCB also etches photoresist. This limits the thickness of BCB to about 1 micron. If a combination of metal and photoresist layers is used to pattern the BCB then it becomes very expensive due to the extra processing equipment and processing needed.

According to the invention, there is provided a method of forming an active plate for a liquid crystal display, comprising:
depositing and patterning a substantially transparent conductor layer to define an array of pixel electrodes over an insulating substrate arranged in rows and columns;
defining row conductors and connected gate conductor portions over different areas of the insulating substrate to the pixel electrodes;
depositing and patterning thin film transistor layers over the gate conductor portions to form transistor bodies, the thin film transistor layers comprising at least a gate insulator and a semiconductor layer;
forming an insulating layer arranged as a plurality of columns, each insulating layer column overlapping the pixel electrodes of two adjacent columns of pixels; and
forming an opaque conductor layer over the substrate and patterning the opaque conductor layer to define column conductors on top of the insulating layer, and source and drain electrodes for the transistor on top of the thin film transistor layers, one of which is connected to a column conductor and the other of which is connected to an associated pixel electrode.

In this method, an insulating layer is defined beneath the column conductors, so that it lies between the crossing row and column conductors. In addition, the columns of insulating layer overlap adjacent pairs of pixel electrodes, so that the column conductors can overlap the pixel electrodes, thereby increasing the pixel aperture. The transparent pixel electrodes are, however, the first layer to be deposited. This gives advantages in process simplification and corresponding cost reduction for manufacture of high quality active matrix LCD (AMLCD) displays. The invention provides an efficient, low cost way of decreasing the width W shown in Figure 1.

The thin film transistor layers of each transistor body may also overlap an adjacent pixel electrode. In this way, the transistor layer also lie beneath the column conductors and provide additional separation between the row and column conductors. In particular, the gate insulator layer provides additional capacitive separation.

The insulating layer preferably comprises a polymer for example a photo-acrylic polymer, and acts as a field shield layer.

Defining the array of pixel electrodes and the row conductors can be performed with a first, single-mask process. Forming the transistor bodies and the insulating layer can be performed with a second, single-mask process. Forming the column conductors and source and drain electrodes can be performed with a third, single-mask process. Thus, a three-mask process can be used for manufacture of the display. Each single mask process may use a half-tone photo-mask.

The invention also provides an active matrix liquid crystal display device, comprising an active plate and a passive plate with liquid crystal sandwiched between, wherein the active plate comprises:
an insulating substrate;
an array of rows and columns of pixel electrodes and an array of row conductors, occupying different areas over the substrate, the pixel electrodes being substantially transparent and the row conductors having gate conductor portions;
thin film transistor layers over the gate conductor portions to define transistor bodies,
an insulating layer arranged as a plurality of columns, each insulating layer column overlapping the pixel electrodes of two adjacent columns of pixels;
opaque column conductors provided on top of the insulating layer; and
source and drain electrodes for the transistor on top of the thin film transistor layers one of which is connected to a column conductor and the other of which is connected to an associated pixel electrode.

This device is formed by the method of the invention, and has rows of insulator separating the column conductors from the row conductors and enabling the row conductors to overlap (and thereby completely fill the space between) adjacent columns of pixel electrodes.

Again, the thin film transistor layers may define, in addition to the transistor bodies, columns which lie beneath the insulating layer.

An example of the invention will now be described in detail with reference to the accompanying drawings, in which:
Figure 1 shows a plan view of a known colour AMLCD;
Figure 2 shows a cross section through a known standard AMLCD;
Figure 3 shows how a black mask layer is used to improve the performance of the AMLCD of Figure 2;
Figure 4 shows the electrical elements of each pixel;
Figure 5 shows a known Field Shielded Pixel design, in cross section through the transistor;
Figure 6 shows the known Field Shielded Pixel design, in cross section through the column;
Figure 7 shows the active plate of the display of the invention, in cross section through the transistor;
Figure 8 shows the active plate of the display of the invention, in cross section through the column;
Figures 9A to 9D show the steps of producing the pixel electrodes and row conductors in the method of the invention;
Figure 10 shows in plan view the structure resulting from the method of Figures 9A to 9D;
Figures 11 A to 11 D show the steps of producing the transistor bodies and insulating layer in the method of the invention;
Figure 12 shows in plan view the shape of the transistor layers and insulating layer deposited in the method steps of Figures 11A to 11 D;
Figure 13 shows in plan view the structure resulting from the method of Figures 11 A to 11 D;
Figures 14A to 14E show the steps of producing the column conductors and source and drain electrodes in the method of the invention;
Figure 15 shows in plan view the shape of the column conductors and source and drain electrodes deposited in the method steps of Figures 14A to 14D; and
Figure 16 shows the complete device structure in plan view.

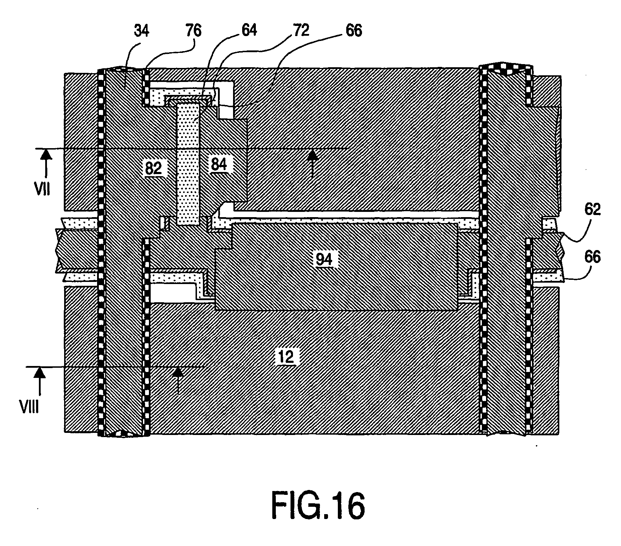

Figures 7 and 8 show the active plate of the display of the invention, in cross section through the transistor (Figure 7) and in cross section through the column (Figure 8). The locations of the cross sections can be seen in Figure 16.

The active plate comprises an insulating substrate 60 over which the array of pixel electrodes 12 is directly deposited. The array of row conductors 30 is also provided directly over the substrate, and occupying different areas to the pixel electrodes. The pixel electrodes are substantially transparent, preferably formed from ITO, whereas the row conductors comprise the ITO layer 62 of the pixel electrodes and an additional layer 64 for increasing the conductivity and which renders the row conductors opaque. The row conductors 30 have portions defining gate conductors, as can be seen in Figure 7.

Thin film transistor layers 66 are provided over the gate conductor to define transistor bodies 68. These layers comprise a silicon nitride gate insulator 70 an amorphous silicon layer 72 and an n-type doped silicon contact layer 74. These layers 66 not only define the transistor body but also extend to an adjacent pixel electrode (12a in Figure 7). In this example, the transistor layers also extend beneath the columns, as can be seen in Figure 8.

A polymer insulating layer 76 is defined as a plurality of columns, each insulating layer column overlapping the pixel electrodes 12 of two adjacent columns of pixels, as shown in Figure 8. The opaque column conductors 34 are provided on top of the polymer insulating layer 76, and the metal layer which defines the column conductors 34 also defines the source 82 and drain 84 electrodes for the transistor 68 on top of the thin film transistor layers 66. One of the source and drain 82 is connected to a column conductor 80 and the other 84 is connected to an associated pixel electrode 12b.

Without the polymer field shield layer 76, the capacitance between the pixel and columns 34 becomes too high. It is not possible to use the silicon nitride gate insulator layer on its own because it has a dielectric constant of 6.4 and an unrealistically thick layer would be needed to give sufficiently low capacitance.

There are several advantages to this design of high optical aperture ratio array. The first is that the polymer does not need to be transparent. This means that a large range of polymers can be used, including ones that are photodefinable. This can lead to lower cost and opens the way for shorter, simpler manufacturing processes. The polymer layer also does not need to have such good planarisation properties because it does not cross over the edge of the visible pixel. The combination of greater polymer choice and simpler manufacturing processes leads to substantial cost savings in manufacturing. Several different polymers can be used, such as photodefinable polyimide or acrylic layers.

The method of manufacturing the device shown in Figures 7 and 8 will now be described, with an additional capacitor electrode. A three mask process can be used as will be apparent from the following, in particular by using half-tone photo-masks. Half-tone masks can be made with diffraction gratings or silicon rich silicon nitride as a grey mask. Both techniques reduce light throughput to produce areas in which the illumination intensity is intermediate between clear areas of the mask and areas covered with metal. In this way the half tone mask can be used to define areas where there is two different thicknesses of photopolymer, as well as areas in which the photopolymer is totally removed. This can be used to reduce the total number of photomasks that are needed.

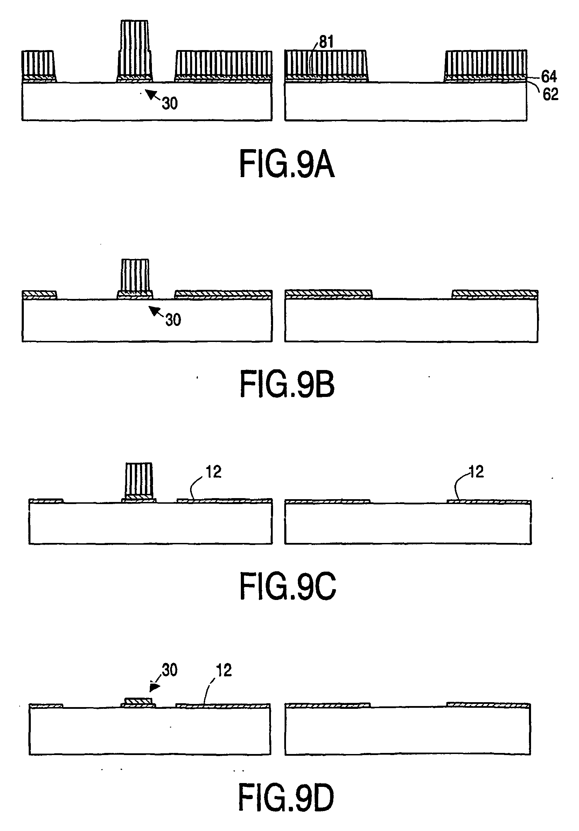

In Figures 9, 11 and 14, the left column of cross sections are the cross sections through the TFT, corresponding to Figure 7, and the right column of cross sections are the cross sections through the column, corresponding to Figure 8. The thickness and widths of layers has been exaggerated or otherwise distorted in the Figures for the purposes of clarity.

Each of Figures 9, 11 and 14 shows one of the three mask processes of the method of the invention.

Figures 9A to 9D show the initial steps of producing the pixel electrodes and row conductors.

In Figure 9A, a sputter deposition technique is used to deposit an ITO layer 62 and a gate metal layer 64. A half-tone mask 81 is used to etch the metal and ITO. As shown, the half tone mask is thicker over the portion of the layers 62, 64 to define the row conductors and gate conductor. In Figure 9B, oxygen plasma is used to etch away the thin layers of.photoresist, only leaving photoresist in the areas that originally had thick photoresist, namely the gate conductor regions 30. In Figure 9C, the gate metal is etched away from the pixel electrode areas. Removal of the photoresist in Figure 9D leaves the ITO pixel electrodes and the row conductors 30 which are in the form of a two layer ITO and gate metal stack.

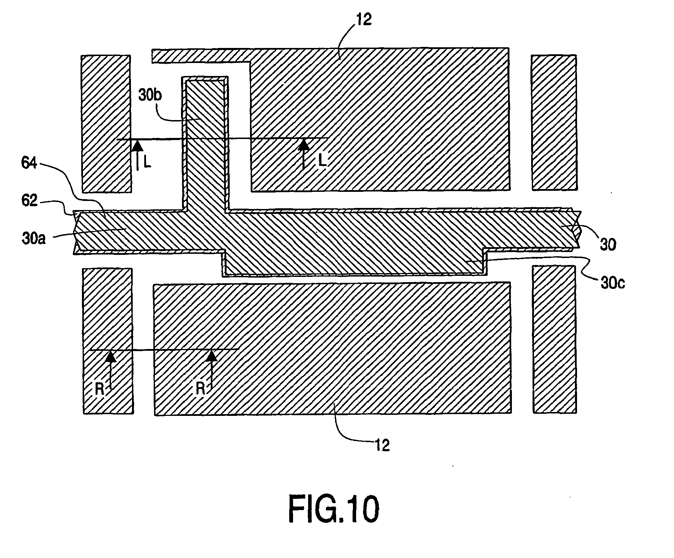

Figure 10 shows in plan view the structure resulting from the method of Figures 9A to 9D. As shown, an array of rows and columns of pixel electrodes 12 are provided, with an array of row conductors 30, occupying spaces between the rows of pixel electrodes. The row conductors 30 have gate conductor portions 30b as well as row portions 30a. In this example, the row portion 30b has a wider portion 30c which acts as a capacitor terminal as will be apparent further below.

The cross section arrows in Figure 10 show where the left and right columns of Figure 9 are viewed.

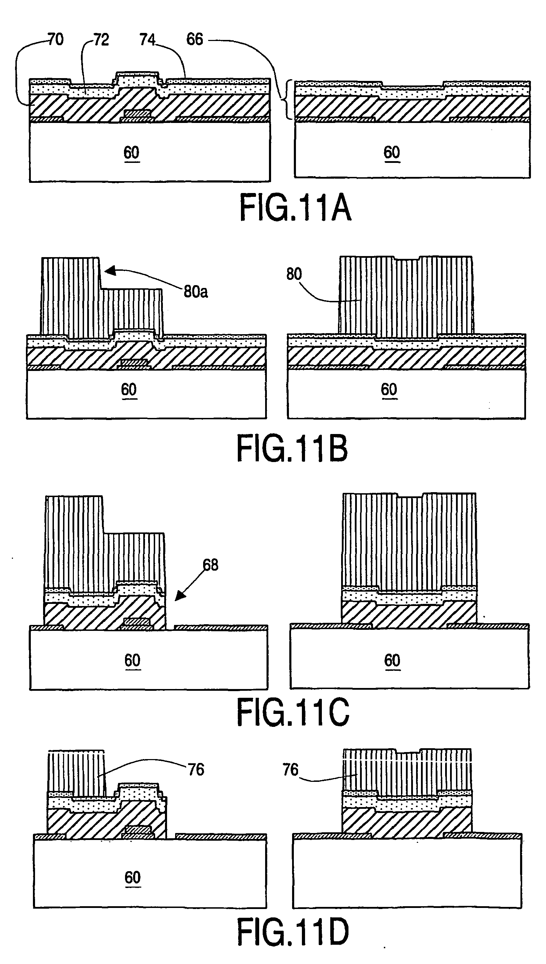

Figures 11 A to 11 D show the steps of producing the transistor bodies and insulating layer in the method of the invention.

In Figure 11A plasma deposition is used to define the TFT stack 66 of silicon nitride (SiN) 70, amorphous silicon 72 and n+ doped amorphous silicon 74.

In Figure 11B a photopolymer 80, such as photo-acrylic, is patterned to two levels corresponding to the desired shaped of the SiN gate insulator layer and the field shield insulator shape. As explained above, the field shield insulator is arranged as columns, and thus columns are provided with thicker regions 80a of photopolymer.

In Figure 11C, the TFT stack is plasma etched so that the TFT layers 66 define columns as well as the TFT transistor body.

In Figure 11 D, the photo-polymer is partially etched to leave only a pattern 76 where there had originally been a thick layer of polymer, namely over the columns.

It is noted that the width of the photopolymer 76 is in fact the same in the two cross sections of Figure 11 D, but the Figures have been distorted for convenience. The columns are in fact of constant width.

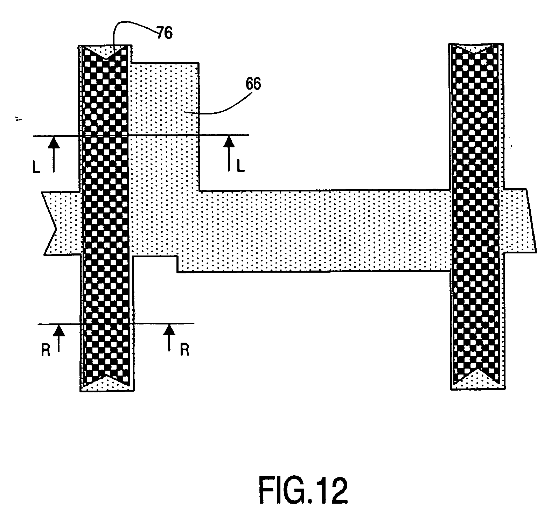

Figure 12 shows in plan view the shape of the transistor layers and insulating layer deposited in the method steps of Figures 11A to 11D. In Figure 12, the photopolymer, which has formed the insulating layer 76, is shown slightly narrower than the TFT layers 66 beneath. This is simply so that both can be seen, but in fact the left side has been etched to the same pattern and they will be aligned. The TFT area has also only been shown for the left column but in fact the pixel pattern will repeat.

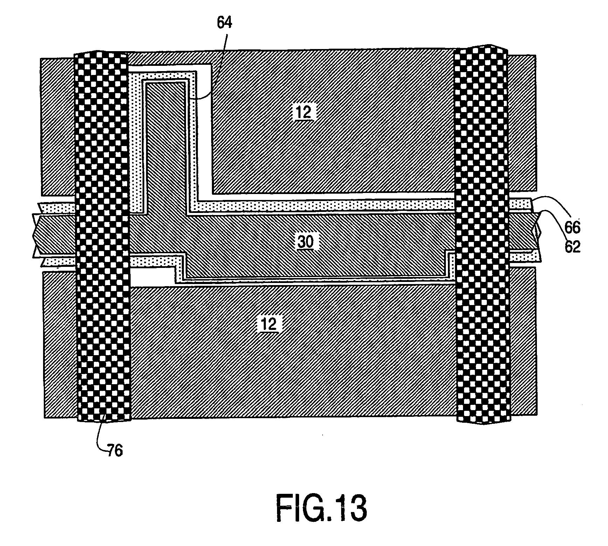

Figure 13 shows in plan view the combined structure resulting from the method steps of Figures 9 and 11.

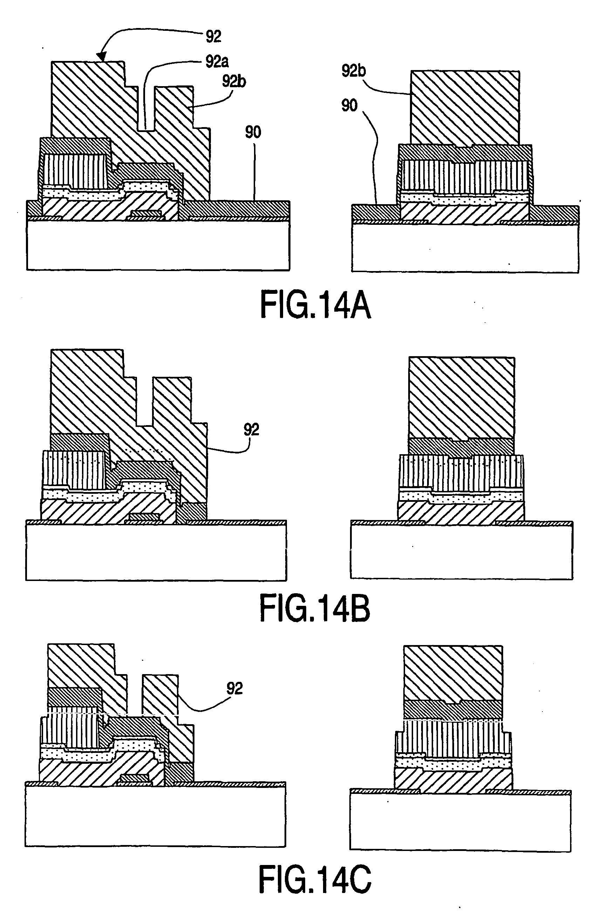

Figures 14A to 14E show the steps of producing the column conductors and source and drain electrodes.

In Figure 14A, a top metal layer 90 is deposited (sputtered) over the substrate and a half-tone mask 92 is used to define a photoresist layer to two thicknesses. The lower thickness 92a is for the TFT, where part of the n+ amorphous silicon layer is to be removed in the region of the gate of the TFT, and the thicker part 92b is for the column conductors and source and drain contacts.

In Figure 14B, the top metal 90 is etched to leave metal columns and source and drain contacts (but no gap over the gate yet).

In Figure 14C, the photoresist layer is thinned using an O₂ plasma, until the area above the gate is exposed.

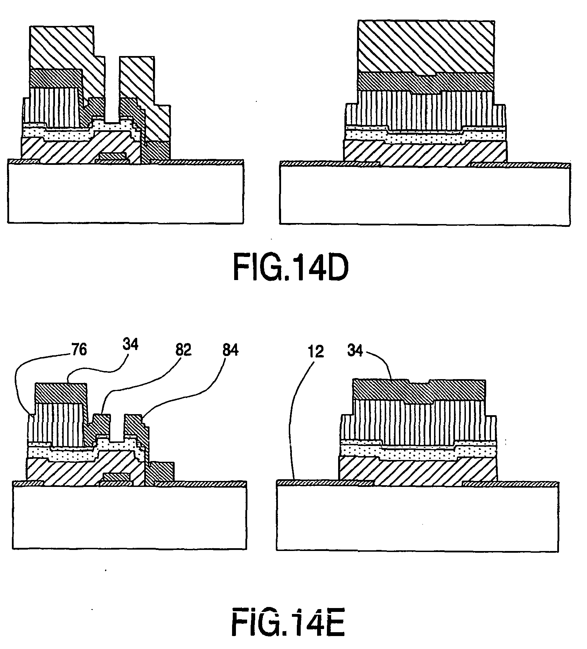

In Figure 14D, the top metal is etched again only in the TFT channel region. Plasma etching is then used to also removes the underlying n+ amorphous silicon layer, so that the n+ layer forms only contact portions for the source and drain.

In Figure 14E, the top photoresist layer 92 is removed.

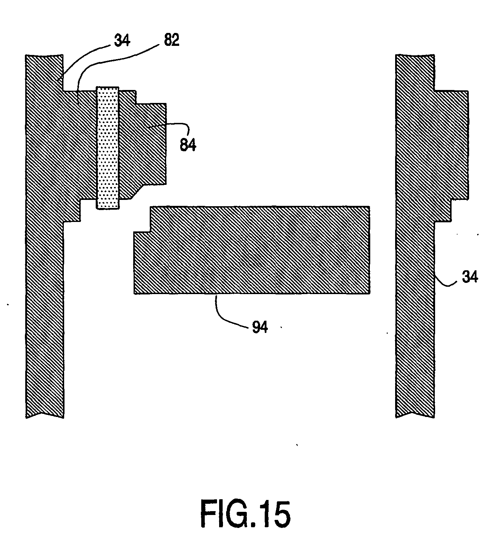

Figure 15 shows in plan view the shape of the column conductors and source and drain electrodes deposited in the method steps of Figures 14A to 14D. The exposed amorphous silicon transistor body 72 is also shown. The top metal layer 90 is also patterned to define a capacitor top contact 94.

Figure 16 shows the complete device structure in plan view. The TFT can either be passivated by a separate polymer or SiN layer, or the LC polyimide alignment layer can be used.

The invention can be applied to any high optical aperture transmissive TN AMLCD.

In the examples above, the polymer field shield layer 76 lies above the TFT stack (silicon nitride and amorphous silicon layers), but the TFT stack could be omitted from beneath the columns and the design will still work. The critical features needed for the polymer stack is that it has low enough capacitance to reduce cross-talk to an acceptable level.

Only one specific example has been given above. It will be appreciated that the materials used to form the various layers are conventional. The processing conditions as well as various optional additional layers to those shown in the specific example, will be apparent to those skilled in the art.

## Claims

1. A method of forming an active plate for a liquid crystal display, comprising:
depositing and patterning a substantially transparent conductor layer to define an array of pixel electrodes (12) over an insulating substrate arranged in rows and columns;
defining row conductors (30) and connected gate conductor portions (30b) over different areas of the insulating substrate to the pixel electrodes;
depositing and patterning thin film transistor layers (66) over the gate conductor portions to form transistor bodies, the thin film transistor layers comprising at least a gate insulator (70) and a semiconductor layer (72);
forming an insulating layer (76) arranged as a plurality of columns, each insulating layer column overlapping the pixel electrodes (12) of two adjacent columns of pixels; and
forming an opaque conductor layer over the substrate and patterning the opaque conductor layer to define column conductors (34) on top of the insulating layer (76) , and source (82) and drain (84) electrodes for the transistor on top of the thin film transistor layers (66), one of which is connected to a column conductor and the other of which is connected to an associated pixel electrode.

2. A method as claimed in claim 1, wherein the thin film transistor layers (66) of each transistor body also overlap an adjacent pixel electrode (12).

3. A method as claimed in any preceding claim, wherein the insulating layer (76) comprises a polymer.

4. A method as claimed in claim 3, wherein the polymer comprises a photo-acrylic polymer.

5. A method as claimed in claims 1 or 2, wherein defining the array of pixel electrodes (12) and the row conductors (30) is performed with a first, single-mask process.

6. A method as claimed in claim 5, wherein forming transistor bodies and the insulating layer is performed with a second, single-mask process.

7. A method as claimed in claim 6, wherein forming the column conductors (34) and source and drain electrodes (82,84) is performed with a third, single-mask process.

8. A method as claimed in claim 7, wherein each single mask process uses a half-tone photo-mask.

9. An active matrix liquid crystal display device, comprising an active plate and a passive plate with liquid crystal sandwiched between, wherein the active plate comprises:
an insulating substrate (60);
an array of rows and columns of pixel electrodes (12) and an array of row conductors (30), occupying different areas over the substrate, the pixel electrodes being substantially transparent and the row conductors (30) having gate conductor portions (30b);
thin film transistor layers (66) over the gate conductor portions to define transistor bodies,
an insulating layer (76) arranged as a plurality of columns, each insulating layer column overlapping the pixel electrodes (12) of two adjacent columns of pixels;
opaque column conductors (34) provided on top of the insulating layer (76); and
source and drain electrodes (82,84) for the transistor on top of the thin film transistor layers (66) one of which is connected to a column conductor (34) and the other of which is connected to an associated pixel electrode (12).

10. A device as claimed in claim 9, wherein the thin film transistor layers (66) define, in addition to the transistor bodies, columns which lie beneath the insulating layer.

11. A device as claimed in claims 9 or 10, wherein the insulating layer (76) comprises a polymer.

12. A device as claimed in claim 11, wherein the polymer comprises a photo-acrylic polymer.

## Patentansprüche

1. Verfahren zur Ausbildung einer aktiven Platte für eine Flüssigkristallanzeige, wonach:
- eine im Wesentlichen transparente Leiterschicht aufgebracht und strukturiert wird, um eine in Zeilen und Spalten angeordnete Matrix von Pixelelektroden (12) über einem Isoliersubstrat zu definieren,
- Zeilenleiter (30) und mit diesen verbundene Gateleiterteile (30b) über verschiedenen Flächen des Isoliersubstrats zu den Pixelelektroden hin definiert werden,
- Dünnschichttransistorenschichten (66) über den Gateleiterteilen aufgebracht und strukturiert werden, um Transistorkörper auszubilden, wobei die Dünnschichttransistorschichten zumindest einen Gateisolator (70) und eine Halbleiterschicht (72) aufweisen,
- eine Isolationsschicht (76) ausgebildet wird, welche als mehrere Spalten angeordnet ist, wobei jede Isolationsschichtspalte die Pixelelektroden (12) von zwei benachbarten Spalten von Pixeln überlappt, und
- eine opake Leiterschicht über dem Substrat ausgebildet und diese strukturiert wird, um Spaltenleiter (34) auf der Oberseite der Isolationsschicht (76) sowie Source-(82) und Drainelektroden (84) für den Transistor auf der Oberseite der Dünnschichttransistorschichten (66) zu definieren, von denen eine mit einem Spaltenleiter und die andere mit einer zugeordneten Pixelelektrode verbunden ist.

2. Verfahren nach Anspruch 1, wobei die Dünnschichttransistorschichten (66) jedes Transistorkörpers eine benachbarte Pixelelektrode (12) ebenfalls überlappen.

3. Verfahren nach einem der vorangegangenen Ansprüche, wobei die Isolationsschicht (76) ein Polymer aufweist.

4. Verfahren nach Anspruch 3, wobei das Polymer durch ein Photoacrylpolymer dargestellt ist.

5. Verfahren nach Anspruch 1 oder 2, wonach die Ausbildung der Matrix von Pixelelektroden (12) und der Zeilenleiter (30) in einem ersten Einmaskenverfahren vorgenommen wird.

6. Verfahren nach Anspruch 5, wonach die Ausbildung von Transistorkörpern und der Isolationsschicht in einem zweiten Einmaskenverfahren vorgenommen wird.

7. Verfahren nach Anspruch 6, wonach die Ausbildung der Zeilenleiter (34) sowie Source- und Drainelektroden (82, 84) in einem dritten Einmaskenverfahren vorgenommen wird.

8. Verfahren nach Anspruch 7, wonach bei jedem Einmaskenverfahren eine Halbtonphotomaske verwendet wird.

9. Aktivmatrix-Flüssigkristallanzeigeeinrichtung, welche eine aktive Platte und eine passive Platte mit dazwischen angeordnetem Flüssigkristall aufweist, wobei die aktive Platte aufweist:
- ein Isoliersubstrat (60),
- eine Matrix von Zeilen und Spalten von Pixelelektroden (12) sowie eine Matrix von Zeilenleitern (30), welche verschiedene Flächen über dem Substrat einnehmen, wobei die Pixelelektroden im Wesentlichen transparent sind und die Zeilenleiter (30) Gateleiterteile (30b) aufweisen,
- Dünnschichttransistorschichten (66) über den Gateleiterteilen, um Transistorkörper zu definieren,
- eine Isolationsschicht (76), welche als mehrere Spalten angeordnet ist, wobei jede Isolationsschichtspalte die Pixelelektroden (12) von zwei benachbarten Spalten von Pixeln überlappt,
- opake Spaltenleiter (34), welche auf der Oberseite der Isolationsschicht (76) vorgesehen sind, sowie
- eine Source- und Drainelektrode (82, 84) für den Transistor auf der Oberseite der Dünnschichttransistorschichten (66), von denen eine mit einem Spaltenleiter (34) und die andere mit einer zugeordneten Pixelelektrode (12) verbunden ist.

10. Anzeigeeinrichtung nach Anspruch 9, wobei die Dünnschichttransistorschichten (66) neben den Transistorkörpern Spalten definieren, welche unterhalb der Isolierschicht liegen.

11. Anzeigeeinrichtung nach Anspruch 9 oder 10, wobei die Isolierschicht (76) ein Polymer aufweist.

12. Anzeigeeinrichtung nach Anspruch 11, wobei das Polymer durch ein Photoacrylpolymer dargestellt ist.

## Revendications

1. Procédé pour former une plaque active pour un affichage à cristaux liquides, comprenant:
le dépôt d'une couche de conducteurs sensiblement transparente et la formation de motifs pour définir un ensemble d'électrodes de pixels (12) sur un substrat isolant disposées en rangées et colonnes;
la définition de conducteurs de rangées (30) et de parties de conducteurs de grilles connectées (30b) sur différentes zones du substrat isolant aux électrodes de pixels;
le dépôt et la formation de motifs de couches de transistors TFT (66) sur les parties de conducteurs de grille pour former des corps de transistors, les couches de transistors TFT comprenant au moins un isolant de grille (70) et une couche de semiconducteur (72);
la formation d'une couche isolante (76) agencée sous la forme d'une pluralité de colonnes, chaque colonne de la couche isolante chevauchant les électrodes de pixels (12) de deux colonnes de pixels adjacentes; et
la formation d'une couche de conducteurs opaque sur la substrat et la formation de motifs dans la couche de conducteurs opaque pour définir des conducteurs de colonnes (34) sur le dessus de la couche isolante (76), et des électrodes de source (82) et de drain (84) pour le transistor sur le dessus des couches de transistors TFT (66), dont l'une est connectée à un conducteur de colonne et l'autre, à une électrode de pixel associée.

2. Procédé suivant la revendication 1, dans lequel les couches de TFT (66) de chaque corps de transistor chevauchent également une électrode de pixel adjacente (12).

3. Procédé suivant l'une quelconque des revendications précédentes, dans lequel la couche isolante (76) comprend un polymère.

4. Procédé suivant la revendication 3, dans lequel le polymère comprend un polymère photo-acrylique.

5. Procédé suivant la revendication 1 ou 2, dans lequel le définition de l'ensemble d'électrodes de pixels (12) et de conducteurs de rangées (30) est effectuée au moyen d'un premier processus à un seul masque

6. Procédé suivant la revendication 5, dans lequel la formation de corps de transistors et de la couche isolante est effectuée au moyen d'un second processus à un seul masque.

7. Procédé suivant la revendication 6, dans lequel la formation des conducteurs de colonnes (34) et des électrodes de source et de drain (82, 84) est effectuée au moyen d'un troisième processus à un seul masque.

8. Procédé suivant la revendication 7, dans lequel chaque processus à un seul masque utilise un photomasque en demi-teintes.

9. Dispositif d'affichage à cristaux liquides à matrice active, comprenant une plaque active et une plaque passive avec des cristaux liquides pris en sandwich entre elles, dans lequel la plaque active comprend:
un substrat isolant (60);
un ensemble de rangées et de colonnes d'électrodes de pixels (12) et un ensemble de conducteurs de rangées (30) occupant des zones différentes sur le substrat, les électrodes de pixels étant sensiblement transparentes et les conducteurs de rangées (30) comportant des parties de conducteurs de grilles (30b);
des couches de TFT (66) sur les parties de conducteurs de grilles pour définir des corps de transistors;
une couche isolante (76) disposée sous la forme d'une pluralité de colonnes, chaque colonne de couche isolante chevauchant les électrodes de pixels (12) de deux colonnes de pixels adjacentes;
des conducteurs de colonnes opaques (34) prévus sur le dessus de la couche isolante (76); et
des électrodes de source et de drain (82, 84) pour le transistor sur le dessus des couches de TFT (66) dont l'une est connectée à un conducteur de colonne (34) et l'autre est connectée à une électrode de pixel (12) associée.

10. Dispositif suivant la revendication 9, dans lequel les couches de TFT (66), définissent, en plus des corps de transistors, des colonnes qui se trouvent en dessous de la couche isolante.

11. Dispositif suivant la revendication 9 ou 10, dans lequel la couche isolante (76) comprend un polymère.

12. Dispositif suivante la revendication 11, dans lequel le polymère comprend un polymère photo-acrylique.
